# EUROPEAN PATENT APPLICATION

(11) **EP 4 310 667 A1**
(43) Date of publication of application: **24.01.2024**
(21) Application number: 21937759.5
(22) Date of filing: 29.12.2021
(51) Int. Cl.: G06F 8/60

(54) **AI APPLICATION DEPLOYMENT METHOD, AND RELATED PLATFORM, CLUSTER, MEDIUM AND PROGRAM PRODUCT**

(30) Priority: 24.04.2021 CN 202110444943
(71) Applicant: Huawei Cloud Computing Technologies Co., Ltd., Guizhou 550025 (CN)
(72) Inventor: LI, Yuming, Shenzhen, Guangdong 518129 (CN); XIE, Zhouyi, Shenzhen, Guangdong 518129 (CN); XU, Tianxi, Shenzhen, Guangdong 518129 (CN); PAN, Shigang, Shenzhen, Guangdong 518129 (CN)
(74) Representative: Grünecker Patent- und Rechtsanwälte PartG mbB
(86) International application number: PCT/CN2021/142275
(87) International publication number: WO 2022/222537

(57) **Abstract**

This application provides an artificial intelligence (AI) application deployment method, including: A development system converts a trained AI model into at least one adaptation model, where each adaptation model adapts to one inference framework. The development system further generates a model configuration file, where the model configuration file includes configuration information required when the inference framework performs inference based on the corresponding adaptation model. Then, the development system generates an AI application based on an AI functional unit group and the model configuration file, where an AI functional unit is configured to obtain an inference result based on one of the adaptation models. A deployment management system may deploy the AI application to different devices in a unified manner based on the AI functional unit generated by the adaptation model and the model configuration file. Inference code does not need to be manually modified, so that deployment difficulty of AI applications is reduced, and deployment efficiency of the AI applications is improved.

## Description

This application claims priority to Chinese Patent Application No. 202110444943.3, filed with the China National Intellectual Property Administration on April 24, 2021 and entitled "AI APPLICATION DEPLOYMENT METHOD AND RELATED PLATFORM, CLUSTER, MEDIUM, AND PROGRAM PRODUCT", which is incorporated herein by reference in its entirety.

### TECHNICAL FIELD

This application relates to the field of artificial intelligence (artificial intelligence, AI) technologies, and in particular, to an AI application deployment method, an AI application management platform, a computer cluster, a computer-readable storage medium, and a computer program product.

### BACKGROUND

Currently, to facilitate development of AI applications, many AI application development and management systems (which may also be referred to as AI application development and management platforms) have emerged. Developers may perform application development and deployment management through an AI application development and management platform.

An AI application represents an application that is developed for a specific application scenario and that includes at least one operator. An operator in the AI application is a set of operations used to implement some functions. Functions of some operators in the AI application may be implemented by a trained AI model. In other words, in a startup process of the AI application, the trained AI model may be invoked for inference, to obtain an output result of the trained AI model. The AI model needs to rely on an inference framework for inference. The inference framework is software that can be invoked by the AI application to drive the AI model in the AI application to perform inference to obtain the output result of the AI model.

To meet requirements of a plurality of scenarios, an AI application usually needs to be deployed to different devices in various environments (for example, a terminal environment, an edge environment, and a cloud environment). These devices may have different inference hardware. The inference hardware is hardware that has a computing capability and that can be used to implement an inference function. The inference hardware may include a central processing unit (central processing unit, CPU), a graphics processing unit (graphics processing unit, GPU), a neural-network processing unit (neural-network processing unit, NPU), or another chip. A hardware vendor usually provides a specific inference framework for inference hardware developed by the hardware vendor, to achieve high inference performance when corresponding inference hardware is invoked based on the specific inference framework to perform an inference operation in the AI application. Based on the foregoing background, when an AI application is deployed to different types of devices, different inference frameworks need to be used to ensure inference performance of an AI model in the AI application. In this case, inference code of the AI application needs to be separately modified to adapt to different inference frameworks. As a result, deployment difficulty of AI applications is increased, and deployment efficiency of the AI applications is reduced.

### SUMMARY

This application provides an AI application deployment method. In the method, a trained AI model is converted into at least one adaptation model, and a model configuration file is generated. The model configuration file includes configuration information required when an inference framework performs inference based on the corresponding adaptation model. An AI application may be deployed to different devices in a unified manner based on the adaptation model and the model configuration file. Inference code does not need to be manually modified, so that deployment difficulty of AI applications is reduced, and deployment efficiency of the AI applications is improved. This application further provides an AI application management platform, a computer cluster, a computer-readable storage medium, and a computer program product corresponding to the foregoing method.

According to a first aspect, this application provides an AI application deployment method. The method may be performed by an AI application management platform. The AI application management platform is specifically a system configured to implement functions such as AI application development and deployment. The system may be a software system or a hardware system.

Specifically, the AI application management platform includes a development system and a deployment management system. The development system converts a trained AI model into at least one adaptation model, and each adaptation model adapts to one inference framework. The inference framework is specifically software that can be invoked by an AI application to drive an AI model in the AI application to perform inference to obtain an output result of the AI model. The development system also generates a model configuration file. The model configuration file includes configuration information required when the inference framework performs inference based on the corresponding adaptation model. Then, the development system generates an AI application. The AI application includes an AI functional unit and the model configuration file, and the AI functional unit is configured to obtain an inference result based on one adaptation model in the at least one adaptation model. Next, the deployment management system deploys the AI application to a target device.

In the method, a trained AI model is converted into at least one adaptation model, each adaptation model adapts to one inference framework, and a model configuration file carrying configuration information required when the inference framework performs inference based on the corresponding adaptation model is generated, thereby shielding a model difference. An AI application is generated based on an AI functional unit generated by the adaptation model and the model configuration file. Even if the AI application is deployed to a device having different inference hardware, an inference driver (specifically, inference driver code, which may also be referred to as inference code) does not need to be modified to adapt to an inference framework of different inference hardware, so that deployment difficulty of AI applications is reduced, and deployment efficiency of the AI applications is improved

In some possible implementations, the target device includes at least one target device, and each target device corresponds to a different inference framework. In this way, an AI application can be deployed to different devices (for example, devices that have different inference hardware and use different inference frameworks) in a unified manner, thereby improving deployment efficiency of AI applications, reducing deployment costs of the AI applications, and meeting service requirements.

In some possible implementations, before the deployment management system deploys the AI application to the target device, the deployment management system may establish connections to a plurality of deployment devices, and then the deployment management system selects, from the plurality of deployment devices based on a requirement parameter of the AI application, the target device that meets the requirement parameter.

Further, when the deployment management system determines, based on the requirement parameter, a plurality of devices that meet the requirement parameter, the deployment management system may further separately calculate costs of deploying to different devices. The costs may include an energy consumption ratio of the devices, network bandwidths consumed for deploying the AI application to the devices, and the like. The deployment management system may determine, based on the costs, the target device that meets the requirement parameter. In some embodiments, the deployment management system may determine, from the plurality of devices that meet the requirement parameter, a device with a minimum cost as the target device. In some other embodiments, the deployment management system may determine, from the plurality of devices that meet the requirement parameter, a device whose cost is less than a preset value as the target device.

Alternatively, when determining the plurality of devices that meet the requirement parameter, the deployment management system may determine priorities of the plurality of devices that meet the requirement parameter. For example, the deployment management system may determine the priorities of the devices based on the costs of deploying the AI application to the devices. Correspondingly, the deployment management system may determine the target device from a resource pool based on the priorities.

It should be noted that the requirement parameter may be different in different application scenarios. For example, in a multi-channel video transmission application, the requirement parameter may include a quantity of channels and frame rate of a multi-channel video. In another example, in a database query application, the requirement parameter may include queries per second.

In the method, the target device that meets the requirement parameter is selected, so that a resource can be fully utilized, flexible resource scheduling is implemented, and a resource waste is avoided while ensuring the normal operation of AI applications.

In some possible implementations, the deployment management system may deploy the AI application in an image deployment mode. The image deployment mode includes a full image deployment mode and an incremental image deployment mode. Considering deployment efficiency, the deployment management system may build an incremental image of the AI application. For example, the deployment management system may package the model configuration file and a functional unit group of the AI application into an image format through an image building tool, to build the incremental image of the AI application. Then, the deployment management system deploys the AI application to the target device based on the incremental image of the AI application. For example, the deployment management system sends the incremental image to the target device, and the target device starts a container based on the incremental image, to start the AI application.

On one hand, in this method, impact of an environment difference (for example, an operating system difference) can be reduced through an image of an AI application. On the other hand, in this method, an AI application is deployed by sending an incremental image, thereby reducing transmission overheads during AI application deployment, and improving deployment efficiency of the AI applications.

In some possible implementations, there may be a plurality of implementations in which the development system converts the trained AI model into the at least one adaptation model. In a first implementation, when the trained AI model is obtained through training by a model template preset in the development system, the development system converts the trained AI model into the at least one adaptation model based on the preset model template. The model template is a template that integrates configuration information of models with same functions. Through the model template, a model can be easily and quickly imported. The model template preset in the development system has a model conversion capability, and the development system may automatically convert the trained AI model into the at least one adaptation model based on the capability. In a second implementation, when the trained AI model is obtained through training by a model template customized by an AI model developer, the development system converts the trained AI model into the at least one adaptation model based on at least one conversion script defined by the AI model developer.

The trained AI model may be converted into the at least one adaptation model through the foregoing method, and each adaptation model adapts to one inference framework. This avoids a problem that when an AI application is deployed to a device having different inference hardware, inference code needs to be manually modified to adapt to an inference framework corresponding to the inference hardware, and helps implement unified deployment.

In some possible implementations, the development system may further generate a functional unit group, and generate the AI application based on the functional unit group and the model configuration file. The functional unit group may be formed by organizing a plurality of functional units including the AI functional unit. Based on different organization manners, the functional unit group may be represented in different forms, and different forms of functional unit group may be generated in different manners. Generation of the functional unit group in detail is described in detail below.

In a first manner, the development system provides an orchestration tool, for example, a visualized orchestration interface. Orchestration is to flexibly assemble standardized components such as the foregoing functional units, to obtain a service process. The development system may orchestrate, in response to an orchestration operation of an AI application developer, a plurality of functional units including the AI functional unit, to generate the functional unit group. The functional unit group is represented in a form of a graph. For ease of description, the functional unit group is referred to as a service logic graph in embodiments of this application. Because the service logic graph can be obtained through simple orchestration, zero-code programming is implemented.

In a second manner, the development system provides a code editing page. The AI application developer can trigger code writing on the code editing page. Specifically, in response to a code writing operation of the AI application developer, the development system generates the functional unit group based on written code. Correspondingly, the functional unit group is represented in a form of code, for example, in a form of code including interface invoking. When the AI application is deployed to the target device, the target device may load the functional unit group through an interface. In response to the code writing operation of the AI application developer, the development system generates the functional unit group based on the written code. The functional unit group generated through the interface supports dynamic execution/loading, and can meet a service requirement.

In some possible implementations, an input format and/or an output format may be different in different service scenarios. The development system may further support the AI application developer in customizing an input format and/or an output format of an AI application, to improve adaptability of the AI application. Specifically, the development system may present a user interface to the AI application developer, for example, a visualized orchestration interface, and receive, through the orchestration interface, an input format and/or an output format that are/is of the AI application and that are/is configured by the AI application developer. In this way, different input or output formats can be adapted, thereby enhancing adaptability and meets personalized requirements.

In some possible implementations, before generating the model configuration file, the development system further stores the at least one adaptation model in a storage system. The storage system may be a storage system in the AI application management platform, or may be a storage system externally connected to the AI application management platform. Correspondingly, the model configuration file further includes a storage path of the at least one adaptation model. In this way, when the AI application is deployed to the target device, and the target device does not detect the corresponding adaptation model, the target device may obtain the corresponding adaptation model based on the storage path of the adaptation model stored in the model configuration file. The model configuration file stores the path of the adaptation model instead of the adaptation model itself. Therefore, a size of the model configuration file can be greatly reduced, and deployment efficiency of AI applications can be improved.

In some possible implementations, the AI functional unit includes an inference driver, and the inference driver is configured to drive inference of one adaptation model in the at least one adaptation model. Specifically, the inference driver is code that is in an AI functional unit (which may also be referred to as an inference functional unit) and that is used to implement inference in collaboration with an adaptation model, and is also referred to as inference code. The inference code is used to drive inference of one adaptation model in the at least one adaptation model. Based on this, even if the AI application is deployed to a device having different inference hardware, unified deployment of the AI application may be implemented based on the functional unit group formed by the AI functional unit. Inference code in the AI functional unit does not need to be manually modified, so that deployment difficulty of AI applications is reduced, and deployment efficiency of the AI applications is improved.

In some possible implementations, the deployment management system sends a basic library to the target device, where the basic library includes one or more of the following information: an inference framework installation package, an operating system file, a driver file, and a parallel computing library. The deployment management system may encapsulate the basic library into a base image through an image building tool. Before deploying the AI application to the target device, the deployment management system performs application deployment in advance based on the base image. Next, when deployment of the AI application is triggered, the deployment management system may perform deployment based on a corresponding incremental image. In this way, deployment efficiency of Al applications can be improved.

In some possible implementations, after the AI application is started, the AI application may further report a running status of the AI application to the deployment management system. The running status of the AI application may be specifically characterized by a running performance indicator or the like. Running performance indicators of different AI applications may be different. For example, when the AI application is a database query application, the running performance indicator may include queries per second. When an application is deployed to a plurality of target devices, the deployment management system may manage the plurality of devices based on running statuses of the application on the plurality of target devices. For example, a total queries per second is determined based on queries per second of the plurality of target devices. When the total queries per second indicates that at least one target device is faulty, the deployment management system may start the AI application on the other one or more target devices, to avoid service interruption and meet the service requirement.

In some possible implementations, the target device is any one or more of a terminal device, an edge device, or a cloud device. In this way, the terminal device, edge device, and cloud device can be deployed in a unified manner, meeting a requirement of deploying an application in different environments.

It should be noted that the cloud device and the edge device may be devices provided by a cloud service provider. After purchasing or leasing these devices, a tenant may deploy an AI application through an AI application management platform (for example, a deployment management system in the AI application management platform) of the cloud service provider. In some possible implementations, the cloud device, the edge device, and the terminal device may alternatively be devices in tenants' own data centers. These devices may establish connections to the AI application management platform, for example, establish persistent connections. Correspondingly, the AI application may be deployed in a data center of the cloud service provider through the AI application management platform of the cloud service provider.

According to a second aspect, this application provides an AI application management platform. The AI application management platform includes:
a development system, configured to: convert a trained AI model into at least one adaptation model, and generate a model configuration file, where each adaptation model adapts to one inference framework, and model configuration file includes configuration information required when the inference framework performs inference based on the corresponding adaptation model, where
the development system is further configured to generate an AI application, where the AI application includes an AI functional unit and the model configuration file, and the AI functional unit is configured to obtain an inference result based on one adaptation model in the at least one adaptation model; and
a deployment management system, configured to deploy the AI application to a target device.

In some possible implementations, the target device includes at least one target device, and each target device corresponds to a different inference framework.

In some possible implementations, the deployment management system is further configured to:
establish connections to a plurality of deployment devices before the deployment management system deploys the AI application to the target device; and
select, from the plurality of deployment devices based on a requirement parameter of the AI application, the target device that meets the requirement parameter.

In some possible implementations, the deployment management system is specifically configured to:
build an incremental image of the AI application, and deploy the AI application to the target device based on the incremental image of the AI application.

In some possible implementations, the development system is specifically configured to:
convert the trained AI model into the at least one adaptation model based on a model template; or
convert the trained AI model into the at least one adaptation model based on at least one conversion script defined by an AI model developer.

In some possible implementations, the development system is further configured to:
in response to an orchestration operation of an AI application developer, orchestrate a plurality of functional units including the AI functional unit, to generate a functional unit group; or
in response to a code writing operation of an AI application developer, generate a functional unit group based on written code.

In some possible implementations, the development system is specifically configured to:
receive, through a user interface, an input format or an output format that is of the AI application and that is configured by the AI application developer; and
generate the AI application based on the input format or the output format of the AI application.

In some possible implementations, the model configuration file further includes a storage path of the at least one adaptation model, and the development system is further configured to:
store the at least one adaptation model in a storage system before generating the model configuration file.

In some possible implementations, the AI functional unit includes an inference driver, and the inference driver is configured to drive inference of one adaptation model in the at least one adaptation model.

In some possible implementations, the deployment management system is further configured to:
send a basic library to the target device, where the basic library includes one or more of the following information: an inference framework installation package, an operating system file, a driver file, and a parallel computing library.

In some possible implementations, the target device is any one or more of a terminal device, an edge device, or a cloud device.

According to a third aspect, this application provides a computer cluster. The computer cluster includes at least one computer, the computer includes a processor and a memory, the memory stores computer-readable instructions, and the processor executes the computer-readable instructions to perform the AI application deployment method according to the first aspect or any one implementation of the first aspect.

According to a fourth aspect, this application provides a computer-readable storage medium. The computer-readable storage medium stores instructions, and the instructions instruct a device to perform the steps performed by the development system or the steps performed by the deployment management system in the AI application deployment method according to the first aspect or any one implementation of the first aspect.

According to a fifth aspect, this application provides a computer program product including instructions. When the computer program product runs on a device, the device is enabled to perform the steps performed by the development system or the steps performed by the deployment management system in the AI application deployment method according to the first aspect or any one implementation of the first aspect.

Based on the implementations provided in the foregoing aspects, this application may be further combined to provide more implementations.

### BRIEF DESCRIPTION OF DRAWINGS

To describe the technical methods in embodiments of this application more clearly, the following briefly describes the accompanying drawings for describing embodiments.
FIG. 1 is a system architectural diagram of an AI application management platform according to an embodiment of this application;
FIG. 2 is a system architectural diagram of an AI application management platform according to an embodiment of this application;
FIG. 3 is a schematic diagram of a model configuration file according to an embodiment of this application;
FIG. 4 is a schematic diagram of an orchestration interface according to an embodiment of this application;
FIG. 5 is an interaction flowchart of an AI application deployment method according to an embodiment of this application; and
FIG. 6 is a schematic diagram of a structure of a computer cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more of the features.

First, some technical terms in embodiments of this application are described.

An AI application is an application implemented by an AI technology such as machine learning. The AI application represents an application that is developed for a specific application scenario and that includes at least one operator. An operator in the AI application is a set of operation used to implement some functions. Functions of some operators in the AI application can be implemented by an AI model.

An AI model is a model developed and trained by an AI technology such as machine learning (for example, a deep learning technology). The AI model may specifically be a neural network model. The neural network model can automatically analyze data to obtain a rule, and use the rule to infer unknown data.

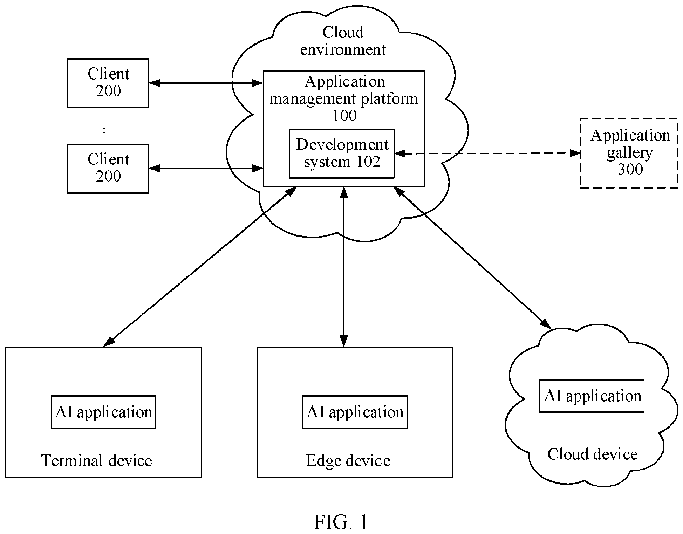

For ease of understanding, an example is described below with reference to a system architecture diagram of an AI application management platform 100 shown in FIG. 1. As shown in FIG. 1, the AI application management platform 100 includes a development system 102, and the development system 102 may be deployed in a cloud environment. The cloud environment indicates a central computing device cluster owned by a cloud service provider and used to provide computing, storage, and communication resources. The cloud environment includes at least one cloud device. The cloud device may be a computing device in the central computing device cluster, for example, a central server. A communication connection is established between a client 200 and the development system 102 in the cloud environment, and the communication connection may be a persistent connection. The client 200 may be a browser or a dedicated client.

An AI model developer may interact with the development system 102 through the client 200, to build and train an AI model in the development system 102, and release the trained AI model after the AI model is trained. Further, an AI application developer may interact with the development system 102 through the client 200, to generate an AI functional unit based on the trained AI model, and generate an AI application based on the AI functional unit and a related pre-processing functional unit and post-processing functional unit. The AI application management platform 100 further supports deployment of the AI application to a terminal device, an edge device, or a cloud device.

In some implementations, the AI application developer may further interact with the AI application management platform 100 through the client 200, to release the AI application to an application gallery 300. In this way, an AI application user may trigger an AI application deployment operation through the application gallery 300, and the application gallery 300 may deploy the AI application to the terminal device, the edge device, or the cloud device. For example, the application gallery 300 may deploy the AI application to the terminal device, the edge device, or the cloud device through the AI application management platform 100.

The AI model developer and the AI application developer may be a same developer, or may be different developers. The terminal device includes but is not limited to a desktop computer, a notebook computer, a tablet computer, a smartphone, or the like. The edge device is a computing device in an edge environment. The computing device in the edge environment may be an edge server, a computing box, or the like. The edge environment indicates an edge computing device cluster whose geographical location is close to the terminal device and that is configured to provide computing, storage, and communication resources. The cloud device is a computing device in a cloud environment, for example, a central server.

An inference framework is generally required when the AI application performs inference through the AI model. The inference framework is software that can be invoked by the AI application to drive the AI model in the AI application to perform inference to obtain an output result of the AI model. Specifically, the inference framework provides an application programming interface (application programming interface, API). The AI application invokes the API to drive the AI model in the AI application for inference. The inference framework is generally provided by a hardware vendor when releasing inference hardware. Different hardware vendors may release different types of inference hardware, such as a CPU, a GPU, an NPU, or another AI chip. To fully utilize performance of the inference hardware, the hardware vendor may further provide an inference framework that adapts to the inference hardware.

The AI application can be used in different scenarios in different fields. For example, the AI application may be a smart city management application, and is configured to implement automatic city management. In another example, the AI application may be a content review application, and is configured to automatically review content to be published on a platform, to improve review efficiency.

Currently, many AI applications need to be deployed in different environments. For example, the smart city management application needs to be deployed in different environments to meet service requirements of collaborative city management in different environments. However, inference hardware of devices in different environments is usually of different types. For example, inference hardware of some devices is a CPU, inference hardware of some other devices is a GPU, and inference hardware of some other devices is an NPU. A hardware vendor usually provides a specific inference framework for inference hardware developed by the hardware vendor, to achieve high inference performance when corresponding inference hardware is invoked based on the specific inference framework to perform an inference operation in the AI application. When an AI application is deployed to different types of devices (for example, devices with different inference hardware), to ensure inference performance of an AI model in the AI application, an inference driver (for example, inference driver code, also referred to as inference code) of the AI application needs to be separately modified to adapt to different inference frameworks. As a result, deployment difficulty of AI applications is improved, and deployment efficiency of the AI applications is reduced.

In view of this, an embodiment of this application provides an AI application management platform 100. The AI application management platform 100 may be a software system or a hardware system that has an AI application management function, and is configured to implement unified deployment of an AI application. Inference code does not need to be modified to adapt to inference frameworks corresponding to different device types, so that inference efficiency is improved, and inference costs are reduced.

For ease of understanding, examples of an AI application management platform 100 provided in embodiments of this application and an application development and deployment process performed by the AI application management platform 100 are described below with reference to the accompanying drawings.

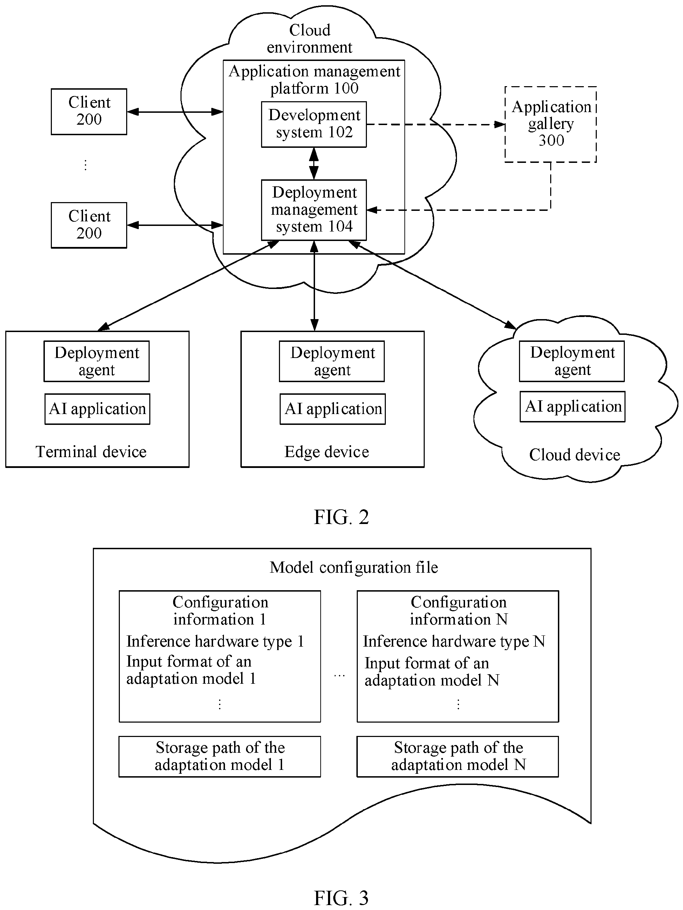

FIG. 2 is a schematic diagram of a structure of an AI application management platform 100. Based on the AI application management platform 100 shown in FIG. 1, the AI application management platform 100 in this embodiment of this application further includes a deployment management system 104. A communication connection is established between the development system 102 and the deployment management system 104. The communication connection includes a wired communication connection or a wireless communication connection. Parts of the AI application management platform 100, such as the development system 102 and the deployment management system 104, may be deployed in a cloud environment in a centralized manner, or may be deployed in a cloud environment in a distributed manner. FIG. 2 is illustrated by using centralized deployment of the development system 102 and the deployment management system 104 as an example.

Specifically, the development system 102 is configured to convert a trained AI model into at least one adaptation model, and generate a model configuration file. Each adaptation model adapts to one inference framework. The model configuration file includes configuration information required when the inference framework performs inference based on the corresponding adaptation model. FIG. 2 is a schematic diagram of a model configuration file. As shown in FIG. 2, the model configuration file includes configuration information 1 required when an inference framework 1 performs inference based on a corresponding adaptation model 1, configuration information 2 required when an inference framework 2 performs inference based on a corresponding adaptation model 2, ..., configuration information N required when an inference framework N performs inference based on a corresponding adaptation model N. N is a positive integer.

As shown in FIG. 2, the configuration information may specifically include an inference hardware type (device type) corresponding to the inference framework. In this way, the inference framework may match corresponding configuration information based on the inference hardware type, and perform inference based on the configuration information. Further, the configuration information may further include another inference configuration item, for example, an input format of the adaptation model, an input identifier of the adaptation model, an output identifier of the adaptation model, a mean square expectation mean of the adaptation model, a scaling coefficient scale of the adaptation model, and image spatial transformation information. The input identifier may be an input name, and the output identifier may be an output name. The image spatial transformation information is used to represent whether image spatial transformation is included. It should be noted that the inference configuration item may be different based on different application scenarios. The foregoing uses a video application as an example for description, and this does not constitute a limitation on the technical solutions of this application.

In some possible implementations, the model configuration file further includes at least one adaptation model. In some other possible implementations, before generating the model configuration file, the development system may store the at least one adaptation model in a storage system. Correspondingly, the model configuration file further includes a storage path of the at least one adaptation model. As shown in FIG. 2, the model configuration file further includes a storage path of the adaptation model 1, a storage path of the adaptation model 2, ..., and a storage path of the adaptation model N. In this way, when the AI application is deployed to a target device, the target device may obtain the corresponding adaptation model based on the storage path in the model configuration file. In some embodiments, the target device may further send a model obtaining request to the deployment management system 104. The deployment management system may obtain a responded adaptation model based on the storage path of the adaptation model in response to the model obtaining request, and then return the responded adaptation model to the target device.

The AI model may be specifically obtained by an AI model developer by interacting with the development system 102 through the client 200 and performing model training. Specifically, the development system 102 may include a cloud integrated development environment (cloud integrated development environment, cloud IDE). The cloud IDE provides an algorithm and data for model training. The cloud IDE can train a model through the algorithm (for example, a deep learning algorithm) based on the data to obtain a trained AI model.

Further, the development system 102 may further provide tool services (tool services) through the cloud IDE. The tool services have the following functions: data management, training management, deployment management, and the like. Training management includes recommending a user (for example, an AI model developer) to use preset model templates to build and train a model. The AI model trained based on these model templates can be automatically converted into an adaptation model that adapts to different inference frameworks.

The cloud IDE also provides a package (package), which includes an algorithm package used for training. The AI model developer selects an algorithm from the algorithm package. After the AI model is trained through the algorithm, the AI model developer can use a conversion capability provided by the tool services to automatically convert the AI model and generate the model configuration file. For example, the AI model developer can click a model conversion control on a user interface to trigger model conversion. The cloud IDE can use the tool services to automatically convert a trained AI model into at least one adaptation model. Each adaptation model adapts to one inference framework. In this way, a model difference can be shielded.

In some possible implementations, the AI model developer may alternatively use a customized model template to perform model training. When using the customized model template to perform training, the development system 102 may convert the trained AI model into the at least one adaptation model based on at least one conversion script defined by the AI model developer. The conversion script may be in a one-to-one correspondence with the adaptation model.

The development system 102 is further configured to generate an AI application. The AI application includes an AI functional unit and the model configuration file. The AI functional unit is configured to obtain an inference result based on one adaptation model in the at least one adaptation model. A functional unit (also referred to as an operator) is a set of program code that includes a series of operations and is used to implement an independent service function. For example, the functional unit may include an AI functional unit for inference, a pre-processing functional unit for processing before inference, or a post-processing functional unit for processing after inference. The pre-processing functional unit includes a resizing functional unit for image resizing, a decoding functional unit for video decoding, and the like. The post-processing functional unit includes a decision functional unit for service decision.

The AI functional unit for inference includes an inference driver, and the inference driver is configured to drive inference of one adaptation model in the at least one adaptation model. In this way, a model difference can be shielded. Even if an AI application is deployed to different devices, the inference driver (that is, inference code) does not need to be manually modified, thereby implementing unified deployment of the AI application.

Specifically, the development system 102 may generate a functional unit group based on the AI functional unit, and generate the AI application based on the functional unit group and the model configuration file. The functional unit group may be formed by organizing a plurality of functional units including the AI functional unit. The functional unit group may be represented in different forms based on an organization manner. The functional unit group and a generation manner of the functional unit group are described in detail below.

In a first implementation, the AI application developer triggers an orchestration operation through an orchestration tool in the development system 102, for example, a visualized orchestration interface. Orchestration is to flexibly assemble standardized components, such as the foregoing functional units, to obtain a service process. The development system 102 orchestrates, in response to the orchestration operation of the AI application developer, the plurality of functional units including the AI functional unit, to generate the functional unit group. In this way, zero-code programming can be implemented. Correspondingly, the functional unit group is represented in a form of a graph. For ease of description, the functional unit group is referred to as a service logic graph in embodiments of this application. When the AI application is deployed to the target device, the target device may load the functional unit group in the form of the service logic graph through a graph engine.

In a second implementation, the AI application developer triggers a code writing operation through the development system 102. Specifically, the functional unit provides an API, the AI application developer may invoke the API of the functional unit by writing code, and the development system 102 generates the functional unit group based on the written code in response to the code writing operation of the AI application developer. Correspondingly, the functional unit group is represented in a form of code, for example, in a form of code including API invoking. When the AI application is deployed to the target device, the target device may load the functional unit group through the API.

Considering that an input format and/or an output format may be different in different service scenarios, the development system 102 may further support the AI application developer in customizing an input format and/or an output format of an AI application, to improve adaptability of the AI application. Specifically, the development system 102 may present a user interface to the AI application developer, for example, a visualized orchestration interface, and receive, through the orchestration interface, an input format and/or an output format that are/is of the AI application and that are/is configured by the AI application developer.

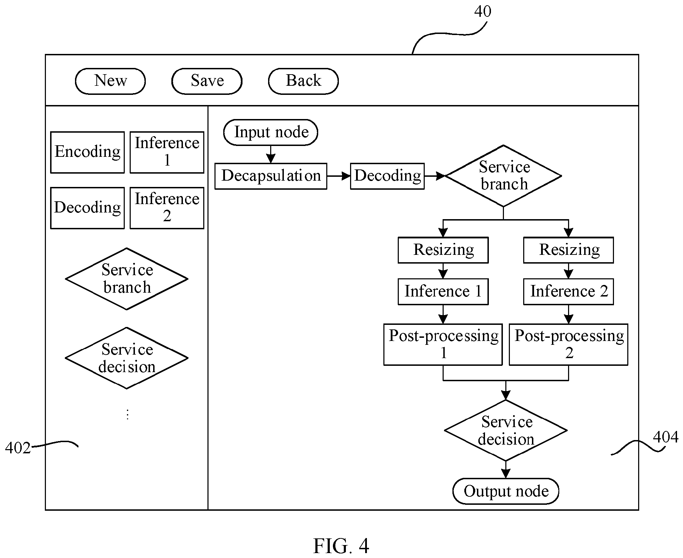

FIG. 4 is a schematic diagram of a visualized orchestration interface. As shown in FIG. 4, an interface 40 includes a toolbar 402 and an editing area 404. The toolbar 402 carries several functional units. An AI application developer may select a functional unit in the toolbar 402, and then drag the functional unit to the editing area 404. For example, the AI application developer may sequentially select a decapsulation functional unit, a decoding functional unit, a service branch functional unit, an image resizing (resize) functional unit, an inference functional unit, a post-processing functional unit, and a service decision functional unit, and drag the selected functional units to the editing area 404. Due to the existence of a service branch, the AI application developer can select the image resizing functional unit for a plurality of times, and select a working unit Inference 1, a working unit Inference 2, a working unit Post-processing 1, and a working unit Post-processing 2. Then, the foregoing functional units are connected in the editing area 304, an input node and an output node are added, an input format of an AI application is configured on the input node, and an output format of the AI application is configured on the output node, to form a service logic graph. The service logic graph may be packaged to form the AI application, and loaded and run through a graph engine.

The service logic graph is generally static. Once packaged into the AI application, a service process of the AI application is usually not dynamically modified. Based on this, when the service process needs to be dynamically modified, a dynamic service logic graph (dynamic graph for short) may be generated, and the graph engine may load the dynamic graph by a function call.

The development system 102 may further provide a debugging function, to debug service logic of the AI application. It should be noted that for some service logic, when the development system 102 does not provide a corresponding functional unit, the development system 102 further supports the AI application developer in manually writing code corresponding to the service logic.

The deployment management system 104 is configured to deploy the AI application to a target device. The target device may be one or more devices in a resource pool. The resource pool is specifically formed by at least one of a terminal device, an edge device, and a cloud device. It should be noted that a deployment agent is pre-installed in the terminal device, the edge device, and the cloud device. A persistent connection is established between the deployment agent and the deployment management system 104, and the deployment agent is configured to collaborate with the deployment management system 104, to complete unified deployment of the AI application.

Specifically, the deployment management system 104 may package a model configuration file and the service logic graph through a packaging tool or an encapsulation tool, for example, a continuous integration/continuous delivery (Continuous Integration/Continuous Delivery, CI/CD) tool, to generate a package in a specified format, and deploy the package to the target device. When the target device provides a service externally in a container manner, the deployment management system 104 may further build an image of the AI application based on the AI application through an image building tool, and then deploy the AI application to the target device, for example, a container of the target device, based on the image of the AI application. In this way, impact of an environment difference can be reduced through the image.

It should be noted that when packaging files, the deployment management system 104 may further package another desired file, for example, packaging a basic library (basic lib). The basic library includes one or more of an inference framework installation package, an operating system (operating system, OS) file, a driver (driver) file, and a parallel computing library. The inference framework installation includes a plurality of inference frameworks, for example, one or a combination of Pytorch, Mindspre, TensorFlow, solver, scientific computing, and DASK.

Further, the deployment management system 104 may generate a base image and an incremental image. For example, the deployment management system 104 may generate the base image based on the basic library, and generate the incremental image based on the AI application (for example, the model configuration file and a functional unit group of the AI application). The deployment management system 104 may deploy the base image to the target device in advance, and then deploy the incremental image of the AI application to the target device when deployment of the AI application is triggered, to implement deployment of the AI application.

Considering that requirements of different AI applications may be different, the deployment management system 104 may establish connections to a plurality of deployment devices before deploying the AI application to the target device, and then select, from the plurality of deployment devices based on a requirement parameter of the AI application, the target device that meets a requirement parameter. Using a multi-channel video transmission application as an example, the requirement parameter of the multi-channel video transmission application includes at least one of a quantity of channels and frame rate (frame per second, FPS) of a multi-channel video. The deployment management system 104 may determine the target device that meets the requirement parameter based on the quantity of channels and FPS of the multi-channel video, and quantities of channels of videos supported by a plurality of devices in the resource pool and refresh rates of the devices. A quantity of channels supported by the target device is not less than the quantity of channels of the multi-channel video, and a refresh rate of the target device is not less than the FPS of the multi-channel video. It should be noted that the target device may be a single device, or may be a plurality of devices, and a sum of quantities of channels supported by the plurality of devices is not less than a quantity of channels of a multi-channel video. The foregoing descriptions are merely some examples of this application. In another possible implementation of this application, the deployment management system 104 may further determine, based on another parameter, for example, queries per second (queries per second, QPS), the target device that meets the requirement parameter.

Further, when the deployment management system 104 determines, based on the requirement parameter, a plurality of devices that meet the requirement parameter, the deployment management system 104 may further separately calculate costs of deploying to different devices. The costs may include an energy consumption ratio of the devices, network bandwidths consumed for deploying the AI application to the devices, and the like. The deployment management system 104 may determine, based on the costs, the target device that meets the requirement parameter. In some embodiments, the deployment management system 104 may determine, from the plurality of devices that meet the requirement parameter, a device with a minimum cost as the target device. In some other embodiments, the deployment management system 104 may determine, from the plurality of devices that meet the requirement parameter, a device whose cost is less than a preset value as the target device.

In some possible implementations, when determining the plurality of devices that meet the requirement parameter, the deployment management system 104 may determine priorities of the plurality of devices that meet the requirement parameter. For example, the deployment management system 104 may determine the priorities of the devices based on the costs of deploying the AI application to the devices. Correspondingly, the deployment management system 104 may determine the target device from a resource pool based on the priorities.

Because the model configuration file includes configuration information such as an inference hardware type, when the AI application is deployed to different devices, the target device may match inference hardware type of the target device with the model configuration file, to obtain an adaptation model that matches an inference framework corresponding to the inference hardware type of the target device. When at least one adaptation model converted by the development system 102 is packaged and deployed to the target device, the target device may directly obtain the adaptation model from the development system 102. When the at least one adaptation model converted by the development system 102 is not packaged or deployed to the target device, the target device may obtain the adaptation model based on a storage path of the adaptation model.

In this way, a model difference is shielded, and a developer does not need to manually modify inference code, so that unified deployment of Al applications is implemented, deployment difficulty of Al applications is reduced, deployment efficiency of the AI applications is improved, and deployment costs of AI applications are reduced. In addition, resource scheduling is convenient. A task may be distributed to various devices, for example, may be distributed to a terminal device, an edge device, and a cloud device. In this way, inference may be performed on the terminal device, the edge device, and the cloud device at the same time, and existing AI hardware resources are fully utilized, thereby improving task processing efficiency and resource utilization.

In the embodiment shown in FIG. 2, the AI application developer may further release a developed AI application to the application gallery 300. In this way, an AI application user may trigger an application deployment operation through the application gallery 300. The application gallery 300 generates an application deployment request in response to the application deployment operation, and then sends the application deployment request to the deployment management system 104, to request to deploy the AI application to the target device.

FIG. 1 to FIG. 4 describe in detail the AI application management platform 100 provided in embodiments of this application. The following describes in detail the method provided in embodiments of this application from a perspective of interaction between the development system 102 and the deployment management system 104 in the AI application management platform 100.

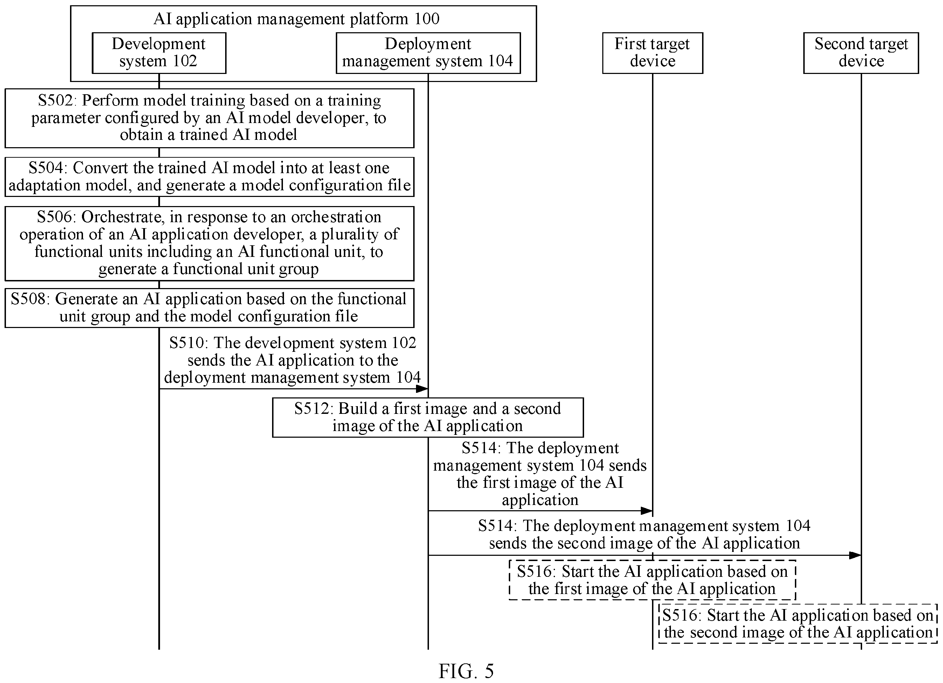

FIG. 5 is a flowchart of an AI application deployment method. The method includes the following steps.

S502: The development system 102 performs model training based on a training parameter configured by the AI model developer, to obtain a trained AI model.

The training parameter may include a model template. The model template is a template that integrates configuration information of models with same functions. Through the model template, a model can be easily and quickly imported. The model template configured by the AI model developer may be a model template preset in the development system 102, or may be a model template customized by the AI model developer.

Specifically, at least one model template is preset in the development system 102. The AI model developer may select a proper model template based on a service requirement. In response to a selection operation of the AI model developer, the development system 102 performs model training through the selected model template, to obtain the trained AI model. In some embodiments, the AI model developer may customize the model template, and perform model training based on the customized model template, to obtain the trained AI model.

The training parameter further includes a training algorithm and a training dataset. The training algorithm is an algorithm used for model training, for example, a gradient descent (gradient descent, GD) algorithm or a back propagation (back propagation, BP) algorithm. The training dataset may be an open source dataset, for example, an open source image dataset or an open-source text dataset provided by an open source community, or a dataset uploaded by the AI model developer in advance. The development system 102 may provide at least one training algorithm and at least one training dataset, so that the AI model developer selects a proper training algorithm and a proper training dataset from the development system 102, to configure the training parameter.

In some possible implementations, the training parameter may further include any one or more of hyperparameters such as a learning rate and a batch size (batch size). This is not limited in this embodiment of this application.

S504: The development system 102 converts the trained AI model into at least one adaptation model, and generates a model configuration file.

The development system 102 provides a model conversion capability for an AI model trained based on the preset model template. Specifically, the development system 102 may automatically convert the trained AI model into the at least one adaptation model, and each adaptation model adapts to one inference framework. For example, the development system 102 may automatically convert the trained AI model into an openvino model and a pb model. The openvino model is a model that adapts to an inference framework corresponding to a CPU, and the pb model is a model that adapts to an inference framework corresponding to a GPU.

When the trained AI model is obtained by training based on the customized model template, the development system 102 may receive conversion scripts that are of adaptation models corresponding to different inference frameworks and that are written by the AI model developer, and then generate at least one adaptation model through the conversion scripts. Each adaptation model adapts to one inference framework.

Considering security of the adaptation model, the development system 102 may further encrypt the adaptation model, to obtain an encrypted adaptation model. Specifically, the development system 102 may encrypt the adaptation model through a symmetric key and a symmetric encryption algorithm (specifically, a weight of the adaptation model and the like), to obtain an encrypted adaptation model. Correspondingly, when the AI application is deployed to the target device, the target device (for example, a deployment agent in the target device) may download a license, where the license may include a key for decryption, and then decrypt the encrypted adaptation model through the key, to obtain the adaptation model.

Symmetric key encryption is merely a schematic implementation of protecting the adaptation model. In some possible implementations, encryption protection may be further performed on the model through a universal serial bus (universal serial bus, USB) dongle and a trusted platform module (trusted platform module, TPM) hardware. This is not limited in this embodiment of this application.

Then, the development system 102 may generate the model configuration file based on configuration information required when each inference framework performs inference based on the corresponding adaptation model. The model configuration file includes configuration information of different adaptation models. The configuration information may specifically include an inference hardware type corresponding to the inference framework. In some embodiments, the configuration information may further include another inference configuration item, for example, any one or more of an input format of the adaptation model, an input identifier of the adaptation model, an output identifier of the adaptation model, a mean square expectation of the adaptation model, a scaling coefficient of the adaptation model, and image spatial transformation information. The inference configuration item may be different based on different application scenarios.

In some possible implementations, the model configuration file further includes at least one adaptation model or a storage path of at least one adaptation model. When the model configuration file includes the at least one adaptation model, after the model configuration file is packaged and deployed to the target device, the target device may directly obtain the adaptation model without remote downloading, thereby improving startup efficiency of the AI application. When the model configuration file includes the storage path of the at least one adaptation model, a size of the model configuration file is greatly reduced. In this way, resources consumed for transmitting the model configuration file can be reduced, and resource utilization can be improved.

For ease of understanding, an embodiment of this application further provides an example of the model configuration file, as shown in the following:

```
          "ModelCfgs" :
              [
                   {
                       "DeviceType" : "Dxxxxxx310_C3X", // inference hardware type
                       "ModelPath": ". /mask_det_902_yuvnv21.om", //storage path of
                       adaptation model
                       "FrameWorkInput": "JPEG",
                       "ModelInput" : "NV21 ",
                       "NetworkWidth": 512,
                       "NetworkHeight": 288,
                       "NetworkChannel": 2,
                       "ScaleMeanEnable": false
                   },
                   {
                       "DeviceType" : "NxxxxNIE",// inference hardware type
                       "ModelPath": ". /mask_det_902_yuvnv21.nnie", //storage path of
                       adaptation model
                       "FrameWorkInput": "NV21 ",
                       "ModelInput" : "NV21 ",
                       "NetworkWidth": 512,
                       "NetworkHeight": 288,
                       "NetworkChannel": 2,
                       "ScaleMeanEnable": false,
                   },
                   {
                       "DeviceType" : "GPU_NxxVxxIDIA",// inference hardware type
                       "ModelPath": "./mask_det_902_rgb.pb", // storage path of adaptation
                       model
                       "FrameWorkInput": "NV12",
                       "ModelInput": "RGB",
                       "InputName": "intput:0",
                       "OutputName": "output:0",
                       "NetworkWidth": 512,
                       "NetworkHeight": 288,
                       "NetworkChannel": 3,
                       "ScaleMeanEnable": true,
                       "Scale": 0.003921569,
                       "MeanR_Y": 0.0,
                       "MeanG": 0.0,
                       "MeanB": 0.0
                   }
              ]
      }
```

In this example, the model configuration file includes configuration information required when three inference frameworks perform inference based on corresponding adaptation models and a storage path of the corresponding adaptation models. The configuration information includes the inference hardware type, as shown in the comments in the foregoing example. The configuration information may further include other configuration items, for example, an application input (frame work input) format, a model input (model input) format, a model input name (input name), a model output name (output name), a network width (network width), a network height (network height), a quantity of network channels, a scaling expectation enabling (ScaleMeanEnable) mode, a scaling coefficient, and mean square expectations on channels (for example, R_Y, G, and B channels).

It should be noted that the foregoing example of the model configuration file is merely a schematic representation of the model configuration file, and some content in the example is masked and is for reference only.

It should be further noted that the AI model trained by the development system 102 may be a scalable model. The scalable model may be a model whose scale (for example, a network depth or a network width) can be elastically scaled. In this way, the development system 102 can adapt to different inference frameworks based on the scalable model.

S506: The development system 102 orchestrates, in response to an orchestration operation of the AI application developer, a plurality of functional units including the AI functional unit, to generate a functional unit group.

The functional unit group includes the AI functional unit. The AI functional unit is configured to implement a function of the trained AI model based on one adaptation model in the at least one adaptation model. The AI functional unit is usually used for inference, and therefore may also be referred to as an inference functional unit. The AI functional unit includes an inference driver. When the inference driver is executed, the inference framework is driven to perform inference on the adaptation model, to obtain an inference result. The functional unit group may further include another functional unit, for example, a pre-processing functional unit for processing before inference, or a post-processing functional unit for processing after inference. The pre-processing functional unit may include a resizing functional unit for image resizing, a decoding functional unit for video decoding, and the like. The post-processing functional unit includes a decision functional unit for service decision, and the like.

The functional unit group may be formed by organizing the plurality of functional units including the AI functional unit. The functional unit group may be represented in different forms based on an organization manner. Specifically, the AI application developer may trigger the orchestration operation through an orchestration tool in the development system 102, for example, a visualized orchestration interface. Orchestration is to flexibly assemble standardized components, such as the foregoing functional units, to obtain a service process. The development system 102 orchestrates, in response to the orchestration operation of the AI application developer, the plurality of functional units including the AI functional unit, to generate the functional unit group. In this way, zero-code programming can be implemented. Correspondingly, the functional unit group is represented in a form of a graph. For ease of description, the functional unit group is referred to as a service logic graph in embodiments of this application.

It should be noted that S506 may be skipped when performing the AI application deployment method in this embodiment of this application. In another possible implementation of this embodiment of this application, the development system 102 may generate the functional unit group in another manner. For example, the AI application developer triggers a code writing operation through the development system 102. The functional unit provides an API, the AI application developer may invoke the API of the functional unit by writing code, and the development system 102 generates the functional unit group based on the written code in response to the code writing operation of the AI application developer. Correspondingly, the functional unit group is represented in a form of code, for example, in a form of code including API invoking.

It should be noted that the AI application developer in S506 and the AI model developer in S502 may be a same developer, or may be different developers. Service logic of an AI application can be decoupled from an AI model used by the AI application. A professional AI model developer trains a model and a professional AI application developer develops service logic. In this way, performance of the AI application can be ensured, and concurrent development can be implemented, thereby improving AI application development efficiency.

Further, some AI model details may be shielded from the AI application developer through the model configuration file, for example, image space transformation information of the AI model, a mean square expectation of the AI model, and a scaling coefficient of the AI model. In this way, data security of the AI model can be ensured, and robustness of the AI application can be improved.

The AI application management platform 100 may deploy the AI application to a plurality of target devices. Based on this, the development system 102 in the AI application management platform 100 may further determine corresponding adaptation models based on inference frameworks corresponding to inference hardware of the plurality of target devices, generate corresponding AI functional units based on the corresponding adaptation models, and generate corresponding functional unit groups based on the AI functional units. For example, when the plurality of target devices include a first target device and a second target device, and an inference framework corresponding to the first target device is different from an inference framework corresponding to the second target device, the development system 102 may separately generate different AI functional units, and separately generate functional unit groups based on the AI functional units. For ease of description, in this application, a functional unit group corresponding to the inference framework of the first target device is denoted as a first functional unit group, and a functional unit group corresponding to the inference framework of the second target device is denoted as a second functional unit group.

S508: The development system 102 generates the AI application based on the functional unit group and the model configuration file.

Specifically, the development system 102 may encapsulate or package the functional unit group and the model configuration file through an encapsulation tool or a packaging tool, for example, a CI/CD tool, to generate the AI application. The AI application is specifically represented as a package, and the package may be an installation package. Based on different functional unit groups, the development system 102 may generate different installation packages.

S510: The development system 102 sends the AI application to the deployment management system 104.

S512: The deployment management system 104 builds a first image and a second image of the AI application.

S514: The deployment management system 104 sends the first image of the AI application to the first target device, and sends the second image of the AI application to the second target device.

The deployment management system 104 may deploy the AI application in an image deployment manner. Based on this, the deployment management system 104 may build an image of the AI application through an image building tool. The image of the AI application is encapsulated with the functional unit group and the model configuration file. When the AI application is deployed to the plurality of target devices, for example, deployed to the first target device and the second target device, the deployment management system 104 may build the first image of the AI application based on the first functional unit group and the model configuration file, and build the second image of the AI application based on the second functional unit group and the model configuration file.

Further, the deployment management system 104 may deploy the AI application through an incremental image. Specifically, the deployment management system 104 may generate a base image based on a basic library. The basic library includes one or more of an inference framework installation package, an operating system (operating system, OS) file, a driver (driver) file, and a parallel computing library. The inference framework installation includes a plurality of inference frameworks, for example, one or a combination of Mindspore, solver, scientific computing, and DASK. The deployment management system 104 may generate an incremental image based on the AI application (for example, the model configuration file and the functional unit group of the AI application). The deployment management system 104 deploys the base image to the target device in advance, and then deploys the incremental image of the AI application to the target device when deployment of the AI application is triggered.

The deployment management system 104 may deploy the AI application to one or more target devices based on different service requirements. Each target device may correspond to a different inference framework. Before the deployment management system deploys the AI application to the target device, the deployment management system 104 may establish connections to a plurality of deployment devices, and then select, from the plurality of deployment devices based on a requirement parameter of the AI application, the target device that meets the requirement parameter. The requirement parameter may be different in different application scenarios. For example, in a multi-channel video transmission application, the requirement parameter may include a quantity of channels and FPS of a multi-channel video. In another example, in a database query application, the requirement parameter may include QPS.

Further, when the deployment management system 104 determines, based on the requirement parameter, a plurality of devices that meet the requirement parameter, the deployment management system 104 may further separately calculate costs of deploying to different devices. The costs may include an energy consumption ratio of the devices, network bandwidths consumed for deploying the AI application to the devices, and the like. The deployment management system 104 may determine, based on the costs, the target device that meets the requirement parameter. In some embodiments, the deployment management system 104 may determine, from the plurality of devices that meet the requirement parameter, a device with a minimum cost as the target device. In some other embodiments, the deployment management system 104 may determine, from the plurality of devices that meet the requirement parameter, a device whose cost is less than a preset value as the target device.

In some possible implementations, when determining the plurality of devices that meet the requirement parameter, the deployment management system 104 may determine priorities of the plurality of devices that meet the requirement parameter. For example, the deployment management system 104 may determine the priorities of the devices based on the costs of deploying the AI application to the devices. Next, the deployment management system 104 may determine the target device from a resource pool based on the priorities.

S512 to S514 are described by using the image deployment manner as an example. In another possible implementation of this embodiment of this application, the deployment management system 104 may skip S512 to S514, but directly deploy the AI application through the installation package of the AI application.

Based on the foregoing description, an embodiment of this application provides an AI application deployment method. In the method, a trained AI model is converted into at least one adaptation model, and a model configuration file is generated. The model configuration file includes configuration information required when each inference framework performs inference based on the corresponding adaptation model. In this way, a model difference can be shielded, and an AI application generated through the model configuration file can be deployed to a target device without manually modifying inference code. This implements unified deployment of the AI application, reduces deployment difficulty, and improves deployment efficiency.

Based on the foregoing solution of this application, after the AI application is deployed to the target device, the target device may further start the AI application. For example, when the AI application management platform 100 deploys the AI application to the first target device and the second target device, based on the method procedure shown in FIG. 5, the method may further include the following steps.

S516: The first target device starts the AI application based on the first image of the AI application, and the second target device starts the AI application based on the second image of the AI application.

Specifically, a deployment agent in the first target device and a deployment agent in the second target device may obtain a corresponding component when no component required for starting the AI application is detected. The component may include at least one of a component at a driver adaptation layer, a component in the functional unit group, and an adaptation model. Using obtaining the adaptation model as an example, the deployment agent in the first target device may obtain a first adaptation model based on a storage path of the first adaptation model in the model configuration file in the first image, and the deployment agent in the second target device may obtain a second adaptation model based on a storage path of the second adaptation model in the model configuration file in the second image. When the component required for starting the AI application is obtained, the first target device and the second target device may start the AI application.

The foregoing describes in detail the AI application deployment method provided in embodiments of this application with reference to FIG. 1 to FIG. 5. The following describes, with reference to the accompanying drawings, the AI application management platform 100 provided in embodiments of this application.

FIG. 2 is a schematic diagram of a structure of an AI application management platform 100. The AI application management platform 100 is specifically a system for developing and deploying an AI application. The system may be a software system or a hardware system. Therefore, the AI application management platform 100 may also be referred to as an AI application management system. The AI application management platform 100 includes:
a development system 102, configured to: convert a trained AI model into at least one adaptation model, and generate a model configuration file, where each adaptation model adapts to one inference framework, and the model configuration file includes configuration information required when the inference framework performs inference based on the corresponding adaptation model, where
the development system 102 is further configured to generate an AI application, where the AI application includes an AI functional unit and the model configuration file, and the AI functional unit is configured to obtain an inference result based on one adaptation model in the at least one adaptation model; and
a deployment management system 104, configured to deploy the AI application to a target device.

In some possible implementations, the target device includes at least one target device, and each target device corresponds to a different inference framework.

In some possible implementations, the deployment management system 104 is further configured to:
establish connections to a plurality of deployment devices before the deployment management system deploys the AI application to the target device; and
select, from the plurality of deployment devices based on a requirement parameter of the AI application, the target device that meets the requirement parameter.

In some possible implementations, the deployment management system 104 is specifically configured to:
build an incremental image of the AI application, and deploy the AI application to the target device based on the incremental image of the AI application.

In some possible implementations, the development system 102 is specifically configured to:
convert the trained AI model into the at least one adaptation model based on a model template; or
convert the trained AI model into the at least one adaptation model based on at least one conversion script defined by an AI model developer.

In some possible implementations, the development system 102 is further configured to:
in response to an orchestration operation of an AI application developer, orchestrate a plurality of functional units including the AI functional unit, to generate a functional unit group; or
in response to a code writing operation of an AI application developer, generate a functional unit group based on written code.

In some possible implementations, the development system 102 is specifically configured to:
receive, through a user interface, an input format or an output format that is of the AI application and that is configured by the AI application developer; and
generate the AI application based on the input format or the output format of the AI application.

In some possible implementations, the model configuration file further includes a storage path of the at least one adaptation model, and the development system 102 is further configured to:
store the at least one adaptation model in a storage system before generating the model configuration file.

In some possible implementations, the AI functional unit includes an inference driver, and the inference driver is configured to drive inference of one adaptation model in the at least one adaptation model.

In some possible implementations, the deployment management system 104 is further configured to:
send a basic library to the target device, where the basic library includes one or more of the following information: an inference framework installation package, an operating system file, a driver file, and a parallel computing library.

In some possible implementations, the target device is any one or more of a terminal device, an edge device, or a cloud device.

The AI application management platform 100 according to this embodiment of this application may correspondingly perform the methods described in embodiments of this application, and the foregoing and other operations and/or functions of systems of the AI application management platform 100 are separately used to implement corresponding procedures of the method in the embodiment shown in FIG. 5. For brevity, details are not described herein again.

An embodiment of this application further provides a computer cluster. The computer cluster may be a computer cluster formed by at least one computer in a cloud environment, an edge environment, or a terminal device. The computer cluster is specifically configured to implement a function of the AI application management platform 100 in the embodiment shown in FIG. 2.

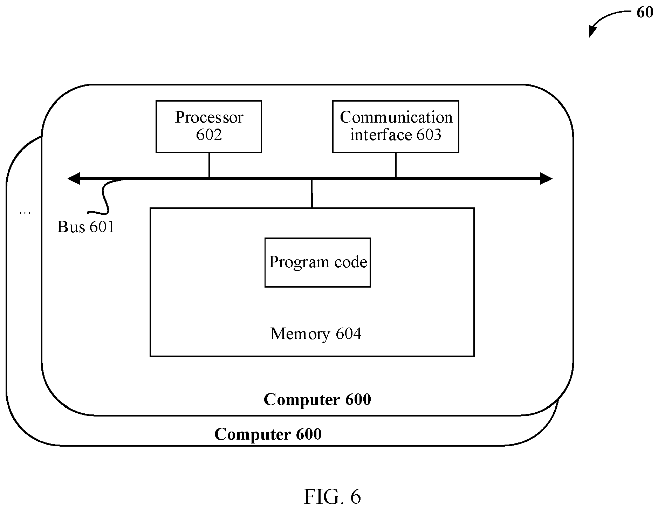

FIG. 6 provides a schematic diagram of a structure of a computer cluster. As shown in FIG. 6, a computer cluster 60 includes at least one computer 600, and the computer 600 includes a bus 601, a processor 602, a communication interface 603, and a memory 604. The processor 602, the memory 604, and the communication interface 603 communicate with each other through the bus 601.

The bus 601 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one bold line in FIG. 6. However, it does not indicate that there is only one bus or only one type of bus.

The processor 602 may be any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 603 is configured to communicate with the outside. For example, the communication interface 603 may be configured to communicate with a target device, and send an image of an AI application to the target device.

The memory 604 may include a volatile memory (volatile memory), for example, a random access memory (random access memory, RAM). The memory 604 may further include a non-volatile memory (non-volatile memory), for example, a read-only memory (read-only memory, ROM), a flash memory, a hard disk drive (hard disk drive, HDD), or a solid state drive (solid state drive, SSD).

The memory 604 stores executable code, and the processor 602 executes the executable code to perform the foregoing AI application deployment method.

Specifically, when the embodiment shown in FIG. 2 is implemented, and systems of the AI application management platform 100 described in the embodiment in FIG. 2 are implemented by software, software or program code of the development system 102 and the deployment management system 104 in FIG. 2 may be stored in the memory 604. The processor 602 executes program code that corresponds to the development system 102 and the deployment management system 104 and that is stored in the memory 604, to perform the foregoing AI application deployment method.

This application further provides another computing device. The computing device may also include a plurality of computers, and a structure of each computer may be same as a structure of the computer 600 shown in FIG. 6. The computing device is configured to perform the method performed by the development system 102, to implement a function of the development system 102. This application further provides another computing device. The computing device may also include a plurality of computers, and a structure of each computer may be same as a structure of the computer 600 shown in FIG. 6. The computing device is configured to perform the method performed by the deployment management system 104, to implement a function of the deployment management system 104.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the foregoing AI application deployment method.

An embodiment of this application further provides a computer program product. The computer program product includes one or more computer instructions. When the computer instructions are loaded and executed on a computing device, the procedures or functions according to embodiments of this application are all or partially generated.

The computer instructions may be stored in a computer-readable storage medium, or may be transmitted from one computer-readable storage medium to another computer-readable storage medium. For example, the computer instructions may be transmitted from a website, a computer, or a data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method in the foregoing AI application deployment method needs to be used, the computer program product may be downloaded and executed on a computing device.

Descriptions of procedures or structures corresponding to the accompanying drawings have respective focuses. For a part that is not described in detail in a procedure or structure, refer to related descriptions of other procedures or structures.

## Claims

1. An artificial intelligence AI application deployment method, wherein an AI application management platform comprises a development system and a deployment management system, and the method comprises:
converting, by the development system, a trained AI model into at least one adaptation model, and generating a model configuration file, wherein each adaptation model adapts to one inference framework, and the model configuration file comprises configuration information required when the inference framework performs inference based on the corresponding adaptation model;
generating, by the development system, an AI application, wherein the AI application comprises an AI functional unit and the model configuration file, and the AI functional unit is configured to obtain an inference result based on one adaptation model in the at least one adaptation model; and
deploying, by the deployment management system, the AI application to a target device.

2. The method according to claim 1, wherein the target device comprises at least one target device, and each target device corresponds to a different inference framework.

3. The method according to claim 1 or 2, wherein before the deploying, by the deployment management system, the AI application to a target device, the method further comprises:
establishing, by the deployment management system, connections to a plurality of deployment devices; and
selecting, by the deployment management system from the plurality of deployment devices based on a requirement parameter of the AI application, the target device that meets the requirement parameter.

4. The method according to any one of claims 1 to 3, wherein the deploying, by the deployment management system, the AI application to a target device specifically comprises:
building, by the deployment management system, an incremental image of the AI application, and deploying the AI application to the target device based on the incremental image of the AI application.

5. The method according to any one of claims 1 to 4, wherein the converting, by the development system, a trained AI model into at least one adaptation model comprises:
converting, by the development system, the trained AI model into the at least one adaptation model based on a model template; or
converting, by the development system, the trained AI model into the at least one adaptation model based on at least one conversion script defined by an AI model developer.

6. The method according to any one of claims 1 to 5, wherein the method further comprises:
in response to an orchestration operation of an AI application developer, orchestrating, by the development system, a plurality of functional units comprising the AI functional unit, to generate a functional unit group; or
in response to a code writing operation of an AI application developer, generating, by the development system, a functional unit group based on written code.

7. The method according to any one of claims 1 to 6, wherein the generating, by the development system, an AI application comprises:
receiving, by the development system through a user interface, an input format or an output format that is of the AI application and that is configured by the AI application developer; and
generating, by the development system, the AI application based on the input format or the output format of the AI application.

8. The method according to any one of claims 1 to 7, wherein the model configuration file further comprises a storage path of the at least one adaptation model, and before the generating a model configuration file, the method further comprises:
storing the at least one adaptation model in a storage system.

9. The method according to any one of claims 1 to 8, wherein the AI functional unit comprises an inference driver, and the inference driver is configured to drive inference of one adaptation model in the at least one adaptation model.

10. The method according to any one of claims 1 to 9, wherein the method further comprises:
sending, by the deployment management system, a basic library to the target device, wherein the basic library comprises one or more of the following information: an inference framework installation package, an operating system file, a driver file, and a parallel computing library.

11. The method according to any one of claims 1 to 10, wherein the target device is any one or more of a terminal device, an edge device, or a cloud device.

12. An AI application management platform, comprising:
a development system, configured to: convert a trained AI model into at least one adaptation model, and generate a model configuration file, wherein each adaptation model adapts to one inference framework, and the model configuration file comprises configuration information required when the inference framework performs inference based on the corresponding adaptation model, wherein
the development system is further configured to generate an AI application, wherein the AI application comprises an AI functional unit and the model configuration file, and the AI functional unit is configured to obtain an inference result based on one adaptation model in the at least one adaptation model; and
a deployment management system, configured to deploy the AI application to a target device.

13. The platform according to claim 12, wherein the target device comprises at least one target device, and each target device corresponds to a different inference framework.

14. The platform according to claim 12 or 13, wherein the deployment management system is further configured to:
establish connections to a plurality of deployment devices before the deployment management system deploys the AI application to the target device; and
select, from the plurality of deployment devices based on a requirement parameter of the AI application, the target device that meets the requirement parameter.

15. The platform according to any one of claims 12 to 14, wherein the deployment management system is specifically configured to:
build an incremental image of the AI application, and deploy the AI application to the target device based on the incremental image of the AI application.

16. The platform according to any one of claims 12 to 15, wherein the development system is specifically configured to:
convert the trained AI model into the at least one adaptation model based on a model template; or
convert the trained AI model into the at least one adaptation model based on at least one conversion script defined by an AI model developer.

17. The platform according to any one of claims 12 to 16, wherein the development system is further configured to:
in response to an orchestration operation of an AI application developer, orchestrate a plurality of functional units comprising the AI functional unit, to generate a functional unit group; or
in response to a code writing operation of an AI application developer, generate a functional unit group based on written code.

18. The platform according to any one of claims 12 to 17, wherein the development system is specifically configured to:
receive, through a user interface, an input format or an output format that is of the AI application and that is configured by the AI application developer; and
generate the AI application based on the input format or the output format of the AI application.

19. The platform according to any one of claims 12 to 18, wherein the model configuration file further comprises a storage path of the at least one adaptation model; and
before generating the model configuration file, the method further comprises:
storing the at least one adaptation model in a storage system.

20. The platform according to any one of claims 12 to 19, wherein the AI functional unit comprises an inference driver, and the inference driver is configured to drive inference of one adaptation model in the at least one adaptation model.

21. The platform according to any one of claims 12 to 20, wherein the deployment management system is further configured to:
send a basic library to the target device, wherein the basic library comprises one or more of the following information: an inference framework installation package, an operating system file, a driver file, and a parallel computing library.

22. The platform according to any one of claims 12 to 21, wherein the target device is any one or more of a terminal device, an edge device, or a cloud device.

23. A computer cluster, wherein the computer cluster comprises at least one computer, the computer comprises a processor and a memory, the memory stores computer-readable instructions, and the processor executes the computer-readable instructions to perform the steps performed by the development system or the steps performed by the deployment management system in the method according to any one of claims 1 to 11.

24. A computer-readable storage medium, comprising computer-readable instructions, wherein when the computer-readable instructions run on a computer, the computer is enabled to perform the steps performed by the development system or the steps performed by the deployment management system in the method according to any one of claims 1 to 11.

25. A computer program product, comprising computer-readable instructions, wherein when the computer-readable instructions run on a computer, the computer is enabled to perform the steps performed by the development system or the steps performed by the deployment management system in the method according to any one of claims 1 to 11.
